(19) Europäisches Patentamt European Patent Office Office européen des brevets

(11) **EP 3 640 585 B1**

(12) **EUROPEAN PATENT SPECIFICATION**

(45) Date of publication and mention of the grant of the patent:
**23.11.2022 Bulletin 2022/47**

(21) Application number: **18818696.9**

(22) Date of filing: **30.05.2018**

(51) International Patent Classification (IPC):
**G01C 3/00** *(2006.01)*    **G01B 11/00** *(2006.01)*
**G01C 3/06** *(2006.01)*    **G06T 7/593** *(2017.01)*
**G01C 3/08** *(2006.01)*    **G06T 7/80** *(2017.01)*
**H04N 13/246** *(2018.01)*    **G06T 1/00** *(2006.01)*
**B60R 1/00** *(2022.01)*    **H04N 13/122** *(2018.01)*
**H04N 13/239** *(2018.01)*    **H04N 13/00** *(2018.01)*

(52) Cooperative Patent Classification (CPC):
**G01C 3/085; G06T 1/20; G06T 7/593; G06T 7/85;**
**H04N 13/122; H04N 13/239; H04N 13/246;**
G06T 2207/20021; H04N 2013/0081

(86) International application number:
**PCT/JP2018/020661**

(87) International publication number:
**WO 2018/230340 (20.12.2018 Gazette 2018/51)**

(54) **STEREO CAMERA DEVICE**

STEREOKAMERAVORRICHTUNG

DISPOSITIF DE CAMÉRA STÉRÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2017 JP 2017117336**

(43) Date of publication of application:
**22.04.2020 Bulletin 2020/17**

(73) Proprietor: **Hitachi Astemo, Ltd.**
**Hitachinaka-shi, Ibaraki 312-8503 (JP)**

(72) Inventors:
• **MATSUO, Shigeru**
**Tokyo 100-8280 (JP)**
• **SASAMOTO Manabu**
**Tokyo 100-8280 (JP)**
• **ICHIGE Atsushi**
**Hitachinaka-shi, Ibaraki 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A2- 1 085 463    JP-A- H05 114 099
JP-A- 2003 256 875    JP-A- 2005 009 883
JP-A- 2011 118 509    US-A- 5 768 404
US-A1- 2014 009 577    US-B1- 6 674 892

## Description

## Technical field

The present invention relates to a stereo camera device.

## Background Art

In order to improve the driving safety of a vehicle, a system is being studied which detects an obstacle ahead by using a camera mounted on the vehicle, and, if there is a possibility of collision with the obstacle, warns a driver and performs automatic braking.

As sensors for monitoring the front of the vehicle, there are millimeter wave radar, laser radar, cameras, and the like. As the types of cameras, there are single-eye cameras and stereo cameras using multiple cameras. The stereo camera can measure a distance to a photographed object using parallax of the overlapping area photographed by two cameras at a predetermined interval. For this reason, it is possible to accurately grasp a collision risk to the object ahead.

The stereo camera obtains parallax between the images taken by the two cameras and converts the parallax into a distance. In order to obtain parallax, it is necessary to determine the degree of coincidence between the images of the two cameras. In order to accurately calculate the parallax, it is necessary to correct a lens distortion of the two images and a positional deviation of the camera correctly. The lens distortion can be corrected by correcting an image distortion by using correction parameters at the time of manufacturing the stereo camera device. On the other hand, since the positional deviation of the camera occurs due to aging, temperature changes, or vibration, it is necessary to adjust the correction parameters after the product is shipped. PTL 1 is proposed as a method for correcting the positional deviation. Furthermore, PTL 2 discloses an adjusting apparatus capable of correcting the positional deviation of stereoscopic images in real time in parallel with the surroundings monitoring control. Eventually, PTL 3 discloses a disparity calculating device configured to readily calculate accurate disparity by dividing an image into multiple regions and correcting image shift for each region.

Citation List

Patent Literature

PTL 1: JP 2003-256875 A
PTL 2: EP 1 085 463 A2
PTL 3: US 2014/009577 A1

Summary of Invention

Technical Problem

In PTL 1, the stereo camera device corrects vertical displacement in real time at predetermined time intervals when being in operation. However, since processing of positional deviation adjustment is processed by software of a microcomputer, the cycle of the processing is very slower than the cycle of parallax calculation. In a case where hardware is provided to increase the processing speed of the processing of the positional deviation adjustment by software, the amount of hardware is increased accordingly, and there is a problem that cost and power consumption are increased.

An object of the present invention is to prevent an addition to the amount of hardware and an increase in the power consumption of a stereo camera device, due to the increase in hardware for the positional deviation adjustment.

Solution to Problem

In order to solve the above-mentioned problem, there is provided a stereo camera device having the features of independent claim 1 which is configured to calculate parallax between a standard image and a reference image, wherein the stereo matching circuit includes a one-dimensional converting unit configured to read out a two-dimensional image in block line units, and the stereo matching circuit searches a plurality of the block lines for the reference image, and detects vertical displacement of the reference image relative to the standard image. Preferred embodiments are described in the dependent claims.

Advantageous Effects of Invention

According to the present invention, since the block matching of the positional deviation detection and the block matching of the parallax calculation can be processed by the common hardware, it is possible to prevent an increase in the amount of hardware and an increase in power consumption. Problems, configurations, and effects other than those described above will be apparent from the description of embodiments below.

Brief Description of Drawings

[FIG. 1] FIG. 1 is a functional block diagram of a stereo camera device.
[FIG. 2] FIG. 2 is an explanatory diagram of parallax calculation.
[FIG. 3] FIG. 3 is a diagram illustrating a standard image and a reference image for performing vertical displacement detection.
[FIG. 4] FIG. 4 is a diagram illustrating a configuration of a parallax calculation unit.
[FIG. 5] FIG. 5 is a diagram illustrating a calculation method of a subpixel of parallax calculation.
[FIG. 6] FIG. 6 is a diagram illustrating a calculation method of a subpixel of vertical displacement detection.
[FIG. 7] FIG. 7 is a flowchart of a vertical displacement adjustment value setting process.
[FIG. 8] FIG. 8 is a diagram illustrating a method of calculating a vertical displacement adjustment value from a result of vertical displacement detection.
[FIG. 9] FIG. 9 is a time chart for processing vertical displacement detection after parallax calculation.
[FIG. 10] FIG. 10 is a time chart for processing parallax calculation after vertical displacement detection.

## Description of Embodiments

Hereinafter, embodiments of the present invention will be described using the drawings and the like. The following description illustrates specific examples of the contents of the present invention, the present invention is not limited to these descriptions, and various changes and modifications by those skilled in the art can be made within the scope of the technical idea disclosed in the present specification. Moreover, in all the drawings for describing the present invention, those having the same function are given the same reference numerals, and the repeated description may be omitted.

## Embodiment 1

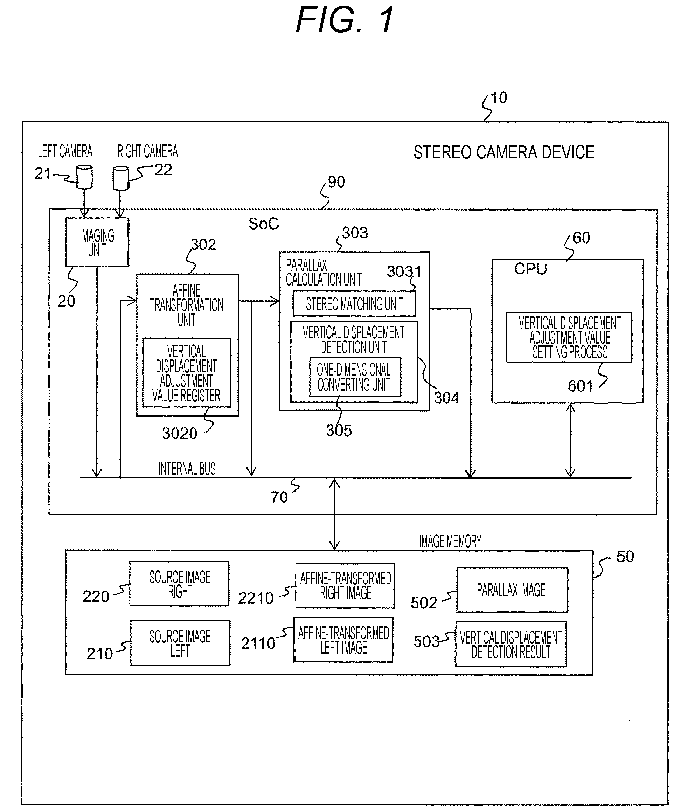

FIG. 1 illustrates a functional block diagram of a stereo camera device 10. In the stereo camera device 10, a CPU 60, an imaging unit 20, an affine transformation unit 302, a parallax calculation unit 303, and an internal bus 70 are mounted on the same system on a chip (SoC) 90.
The imaging unit 20 is connected to two cameras of a right camera 22 and a left camera 21. The imaging unit 20 performs luminance correction and noise removal on images captured by the left and right cameras 21 and 22, and then writes data in areas of a source image right 220 and a source image left 210 in an image memory 50 via the internal bus 70.
In the written source image right 220 and source image left 210, the lens distortion and the positional deviation of the left and right cameras 21 and 22 are corrected by the affine transformation unit 302. The corrected images are written to the image memory 50 as a right image after affine 2210 and a left image after affine 2110. In addition, the parallax between these images, which is for the calculation of distance information, is calculated by a stereo matching unit 3031 of the parallax calculation unit 303.
Furthermore, a vertical displacement detection unit 304 can detect a displacement amount of the vertical displacement of the left and right cameras 21 and 22. These results are stored in a parallax image 502 and a vertical displacement detection result 503 of the image memory 50. Thereafter, a vertical displacement adjustment value setting process 601 operated by the CPU 60 calculates a vertical displacement amount using the vertical displacement detection result 503, and sets the value in a vertical displacement adjustment value register 3020 in the affine transformation unit 302. According to the value of the register 3020, the affine transformation unit 302 can adjust the vertical displacement of the left and right cameras 21 and 22. The image correction process by the register 3020 follows the following operation.

[Equation 1]

$$\begin{pmatrix} x' \\ y' \end{pmatrix} = \begin{pmatrix} \cos\theta & -\sin\theta \\ \sin\theta & \cos\theta \end{pmatrix} \begin{pmatrix} x \\ y \end{pmatrix} + \begin{pmatrix} ShiftX \\ ShiftY \end{pmatrix}$$

Here, x and y are coordinate values of the image input to the affine transformation unit 302, θ is a rotation correction angle, ShiftX is a horizontal displacement amount, and ShiftY is a vertical displacement amount.

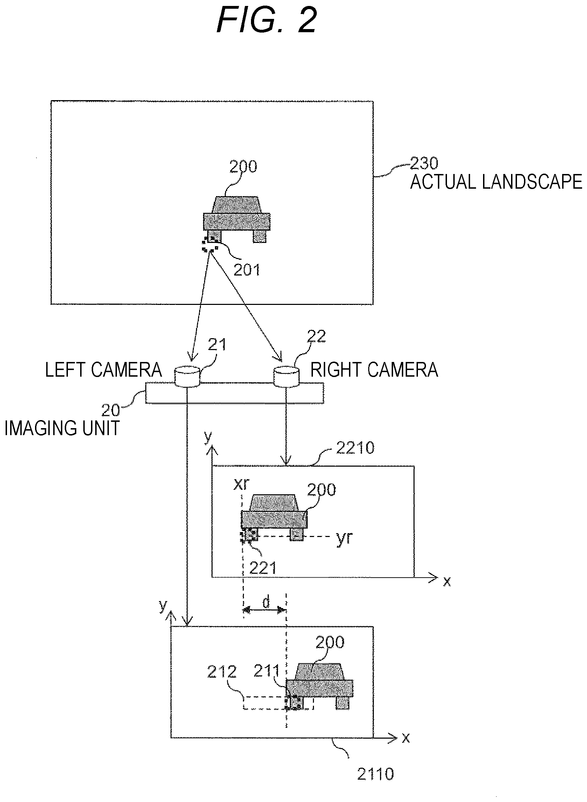

FIG. 2 illustrates a parallax calculation process of the parallax calculation unit 303. An image captured by the right camera 22 is used as a standard image, and a standard block image 221 of, for example, 8 pixels × 8 pixels is defined. The size of the block image is not limited to this example. On the other hand, in the image captured by the left camera 21, a reference image 212 having a search width (for example, 128 pixels) is selected based on the same vertical position (Y coordinate) and horizontal position (X coordinate) as the standard block image 221. Thereafter, the difference between the standard block image 221 and the reference image is calculated. This difference calculation is called SAD and performs the following calculation.

[Equation 2]

$$SAD = \sum\sum |I(i,j) - T(i,j)|$$

Here, I is an 8 × 8 image block in the reference image, T is image data of the standard block image 221, and i and j are coordinates in the image block. In order to calculate one parallax, calculation is performed by the search width while shifting the reference position of the reference image pixel by pixel, and a position at which the SAD value is smallest is searched for.

There is a preceding vehicle 200 in an actual landscape 230 seen from the windshield of the vehicle illustrated in FIG 2. When there are a right image 2210 taken by the right camera 22 and a left image 2110 taken by the left camera 21, a part 201 of the preceding vehicle 200 is imaged at a position 221 in the right image 2210 and is imaged at a position 211 in the left image 2110. As a result, parallax d occurs between the position of the standard block image 221 and the reference block image 211. The parallax d is a large value when the preceding vehicle 200 is close to the stereo camera device 10, and is a small value when the preceding vehicle 200 is far from the stereo camera device 10. The parallax obtained in this manner is obtained for the entire image. It is possible to measure the distance to the stereo camera device 10 using this parallax d by the principle of triangulation.

A distance Z can be obtained from the parallax d by the following equation.

[Equation 3]

$$Z = (f \times B) / d$$

Here, f is the focal length of the right and left cameras, and B is the distance (base length) between the right camera 22 and the left camera 21.

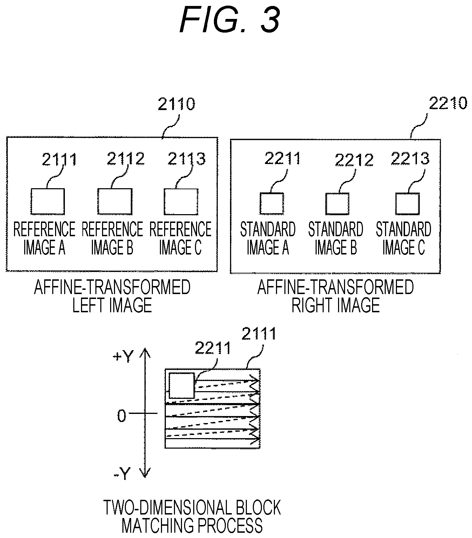

FIG. 3 illustrates an outline of a process of the vertical displacement detection unit 304. A standard image A2211, a standard image B2212, and a standard image C2213 of 16 pixels × 16 pixels are determined at a plurality of locations aligned in one horizontal row of the affine-transformed right image 2210. In the affine-transformed left image 2110, a reference image A2111, a reference image B2112, and a reference image C2113 of 24 × 24 pixels are determined at the same positions as the centers of the standard images. Then, two-dimensional block matching is performed while shifting the standard image A2211 pixel by pixel in the horizontal direction and the vertical direction with respect to the reference image A2111 to obtain the Y coordinate where the images most closely match. If there is no vertical displacement, since the standard image A2211 matches the reference image A2111 at the center of the reference image A2111, the Y coordinate becomes zero.

The evaluation function for the block matching performs the same operation as [Equation 2] for performing parallax calculation. Similarly, the vertical displacement of the standard image B2212 is detected using the reference image B2112, and the vertical displacement of the standard image C2213 is detected using the reference image C2113.

As the number of standard images and reference images is increased, the accuracy of the vertical displacement adjustment is improved. The number of standard images and reference images can be increased by providing hardware for a vertical displacement detection process to increase the processing speed.

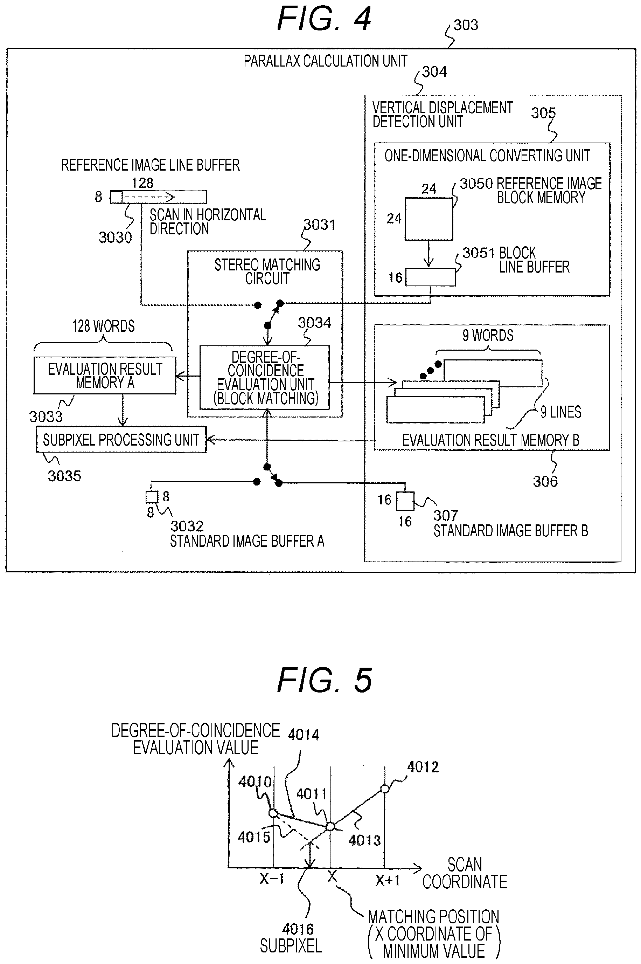

FIG. 4 illustrates a configuration of the parallax calculation unit 303. The parallax calculation unit 303 performs a stereo matching process for calculating parallax and the vertical displacement detection process. In the stereo matching process, an image having a size of 8 × 8 pixels in the affine-transformed right image 2210 is put into a standard image buffer A 3032. This image is the standard block image 221 in FIG. 2.

An image having a size of 8 × 128 pixels in the affine-transformed left image 2110, which is at the same coordinate position as the right image 2210, is input into a reference image line buffer 3030. This image is the reference image 212 in FIG. 2. These two buffers are connected to the stereo matching circuit 3031, an image having a size of 8 × 8 pixels is extracted from the reference image line buffer 3030, calculation of [Equation 2] is performed by a degree-of-coincidence evaluation unit 3034, and the result is input to an evaluation result memory A.

This processing is performed by shifting pixel by pixel for 128 pixels which is the size of the reference image line buffer 3030 in the horizontal direction to perform the degree-of-coincidence evaluation. The 128 evaluation results are input to the evaluation result memory 3033, and the minimum value is extracted from the results. The position of the minimum value becomes the parallax. However, as it is, the accuracy of parallax is the accuracy of integer values of coordinates. In order to further increase the accuracy, a subpixel processing unit 3035 performs subpixel calculation.

In a case where a plurality of minimum values are present or a plurality of evaluation values are present within a predetermined range from the minimum value in the evaluation result memory 3033 of the stereo matching process, since the accuracy of the parallax value at that time is decreased, it is assumed that there is no parallax data. In the case of the vertical displacement detection process, one reference image from the affine-transformed left image 2110 is stored in the reference image block memory 3050.

Next, data of 16 pixels vertically and 24 pixels horizontally is read out from the memory 3050 to a block line buffer 3051. In addition, a standard image in the affine-transformed right image 2210, which corresponds to the reference image, is input to a standard image buffer B 307.

The degree-of-coincidence evaluation unit 3034 of the stereo matching circuit 3031 inputs the result into one line in an evaluation result memory B306 while performing block matching. When processing for one line is completed, data is read from a position shifted pixel by pixel in the vertical direction of the reference image block memory 3050 and stored in the block line buffer 3051. Block matching is performed in the same manner. This processing is performed for all of the reference image block memory 3050.

As a result, evaluation results for 9 words × 9 lines are input to the evaluation result memory B306. The position of the minimum value in the evaluation result memory B306 becomes a matching position, and an evaluation value of the matching position and an evaluation value of a position, of which the X coordinate is the same as that of the matching position and the Y coordinate is +1 and -1 with respect to that of the matching position, are sent to the subpixel processing unit 3035 to calculate the subpixel in a Y direction. In a case where a plurality of minimum values of the evaluation value are present or a plurality of evaluation values are present within a predetermined range from the minimum value, it is assumed that there is no vertical displacement.

FIG. 5 illustrates a method of calculating a subpixel of the parallax. In FIG. 5, the horizontal axis represents the X coordinate obtained by scanning the reference image line buffer 3030, and the vertical axis represents the degree-of-coincidence evaluation value. When an evaluation value 4011 of the coordinate value X is minimum, the X becomes the matching position. The inclinations of a straight line 4013 and a straight line 4014 are calculated using degree-of-coincidence evaluation values 4010 and 4012 of the preceding and succeeding coordinates, and the greater inclinations is selected. In this example, since the inclination of the straight line 4013 is greater, a straight line 4015 which passes through the evaluation value 4010 and has an inclination obtained by inverting the sign of the inclination of the straight line 4013 is calculated. A point 4016 obtained by projecting an intersection of the straight line 4015 and the straight line 4013 on the scan coordinate axis becomes the subpixel, and an accurate matching position can be calculated.

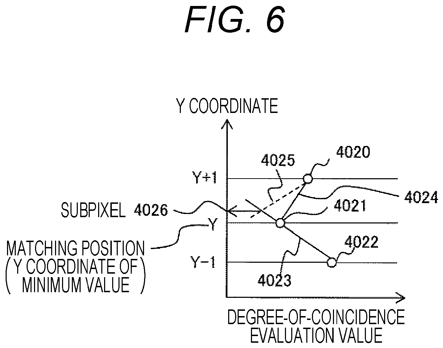

FIG. 6 illustrates a case where a subpixel process of the vertical displacement detection process is performed. The horizontal axis represents the degree-of-coincidence evaluation value, and the vertical axis represents the Y coordinate. The Y coordinate of a portion of a minimum value 4021 in the 9 words × 9 lines in the evaluation result memory B306 becomes the matching position. The inclinations of a straight line 4024 and a straight line 4023 are calculated using evaluation values 4020 and 4022 of the upper and lower coordinates, and the inclinations of which the absolute value is smaller is selected. In this example, since the inclination of the straight line 4023 is smaller, a straight line 4025 which passes through the evaluation value 4020 and has an inclination obtained by inverting the sign of the inclination of the straight line 4023 is calculated. A point 4026 obtained by projecting an intersection of the straight line 4025 and the straight line 4023 on the Y coordinate becomes the subpixel, and an accurate matching position can be calculated.

As described above, since the basic process is the same in FIG. 5 and FIG. 6, both the processes in FIG. 5 and FIG. 6 can be performed by the subpixel processing unit 3035.

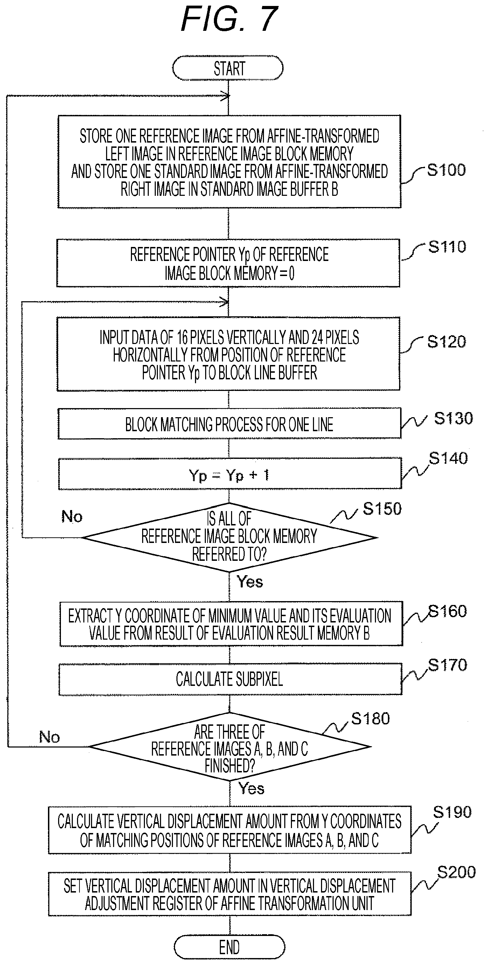

FIG. 7 illustrates a flowchart of a vertical displacement adjustment value setting process 601.

First, one reference image from the affine-transformed left image 2110 is stored in the reference image block memory 3050. Further, a standard image in the affine-transformed right image 2210, which corresponds to the reference image, is stored in the standard image buffer B 307 (S100).

Next, a reference pointer Yp for reading out the reference image block memory 3050 is initialized to zero (S110).

Data of 16 pixels vertically and 24 pixels horizontally from the position of the reference pointer Yp is transferred to the block line buffer 3051 (S120).

Using this data, the block matching for one line is processed by the stereo matching circuit 3031. The evaluation result is stored in one line of the evaluation result memory B306 (S130).

When the block matching for one line is completed, the reference pointer Yp is updated (S140).

Whether the block matching has been performed to the end of the reference image block memory 3050 is determined, and the processing is repeated from S120 until it is determined that the block matching has been performed to the end of the reference image block memory 3050 (S150).

In a case where the block matching of one reference image is completed, the Y coordinate of the minimum value and its evaluation value are extracted from the result of the evaluation result memory B306 (S160).

The subpixel processing unit 3035 calculates a subpixel using the extracted data (S170).

The processing is repeated from S100 until all of the reference images A2111, B2112, and C2113 are finished (S180).

Next, a vertical displacement amount is calculated from the Y coordinates including the subpixels of the matching positions of the reference images A2111, B2112, and C2113 (S190).

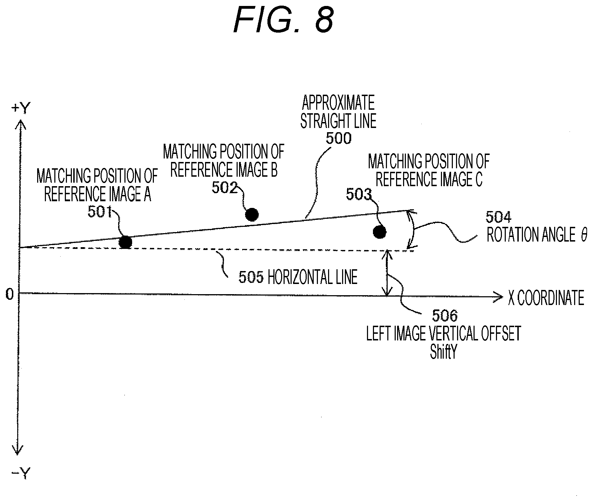

A method of calculating the vertical displacement amount will be described using FIG. 8. Next, the calculated vertical displacement amount is set in the vertical displacement adjustment value register 3020 of the affine transformation unit 302 (S200).

The data set in this manner is calculated by the affine transformation unit 302 as $\theta$ and Shift Y in Equation (1).

FIG. 8 illustrates a method of calculating the vertical displacement amount. The horizontal axis represents the left X coordinate after affine transformation, and the vertical axis represents the Y coordinate of the two-dimensional block matching process illustrated in FIG. 3. A matching position 501 of the reference image A, a matching position 502 of the reference image B, and a matching position 503 of the reference image C, which are calculated in the flowchart of FIG. 7, are disposed in the drawing. These three points are approximated by an approximate straight line 500 by an approximation method such as the least squares method. As a result, an intersection point 506 of the straight line 503 with the Y axis becomes a left image vertical offset ShiftY. An angle 504 between the approximate straight line 500 and a horizontal line 505 horizontally extending from the intersection point 506 is a rotation angle $\theta$.

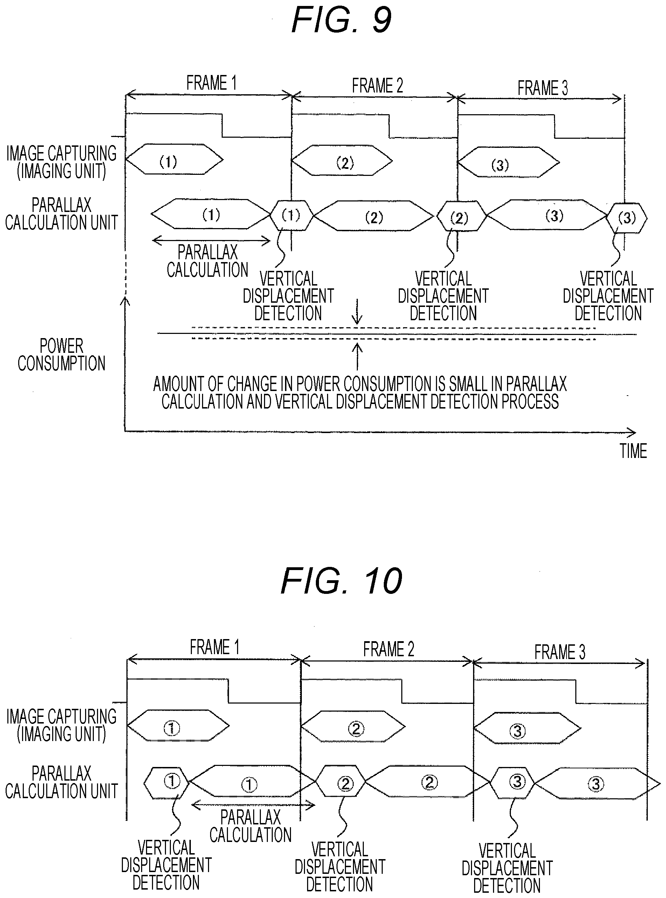

FIG. 9 illustrates a time chart of the parallax calculation and the vertical displacement detection. Since the parallax calculation and the vertical displacement detection share the stereo matching circuit 3031, the parallax calculation and the vertical displacement detection are alternately performed. The parallax calculation of an image (1) is started while the imaging unit 20 is capturing the image (1). Thereafter, after the parallax calculation is completed, the vertical displacement detection is performed on the same image (1). By using this result, vertical displacement adjustment becomes possible in the affine transformation process at the time of the parallax calculation of an image (2). In this manner, it is possible to reduce the time delay from the capturing of the image (1) to the completion of the parallax calculation. However, an image for which the vertical displacement detection is performed and an image for which the parallax calculation is performed are shifted and processed. This method is suitable for the case where the vertical displacement occurs gently. Further, in the power consumption, since the same stereo matching circuit 3031 is used in the parallax calculation and the vertical displacement detection, an amount of change in power consumption of the parallax calculation unit 303 is small. On the other hand, in a case where the vertical displacement detection and the parallax calculation do not share the matching circuit and separately use the matching circuit, instead of performing the processing in parallel, the power consumption is increased at the time of the vertical displacement detection.

FIG. 10 is a diagram in which the processing order of the vertical displacement detection and the parallax calculation in FIG. 9 is reversed. In this case, in the image for which the parallax calculation is performed, since the parallax calculation is always performed after the vertical displacement detection is finished and the vertical displacement is adjusted, the parallax accuracy is increased. This method is suitable for the case where the vertical displacement occurs at high speed due to camera shake or the like.

According to the above embodiment, since the block matching of the vertical displacement detection and the block matching of the parallax calculation can be processed by the common hardware, it is possible to prevent an increase in the amount of hardware and an increase in power consumption. In addition, since the vertical displacement detection process can be performed at high speed, the vertical displacement of the image can be adjusted before performing the parallax calculation, so that there is an effect that the parallax calculation is possible with high accuracy even in an environment where the vertical displacement occurs in frame units.

Reference Signs List

| | |
|---|---|
| 10 | stereo camera device |
| 20 | imaging unit |
| 21 | left camera |
| 22 | right camera |
| 50 | image memory |
| 60 | CPU |
| 70 | internal bus |
| 90 | SoC |
| 210 | source image left |
| 220 | source image right |
| 302 | affine transformation unit |
| 303 | parallax calculation unit |
| 304 | vertical displacement detection unit |
| 305 | one-dimensional converting unit |
| 306 | evaluation result memory B |
| 307 | standard image buffer B |
| 502 | parallax image |
| 503 | vertical displacement detection result |
| 601 | vertical displacement adjustment value setting process |
| 2110 | affine-transformed left image |
| 2210 | affine-transformed right image |
| 3020 | vertical displacement adjustment value register |
| 3030 | reference image line buffer |
| 3031 | stereo matching circuit |
| 3032 | standard image buffer A |
| 3033 | evaluation result memory A |
| 3034 | degree-of-coincidence evaluation unit |
| 3035 | subpixel processing unit |
| 3050 | reference image block memory |
| 3051 | block line buffer |

**Claims**

1. A stereo camera device (10), comprising:

> a stereo matching circuit (3031) configured to calculate parallax between a standard image and a reference image, wherein
> the stereo matching circuit (3031) includes a one-dimensional converting unit (305) configured to read out a two-dimensional image in block line units, and
> the stereo matching circuit (3031) searches a plurality of the block lines for the reference image, and detects vertical displacement of the reference image relative to the standard image, **characterised in that**
> a process of calculating parallax and a process of detecting the vertical displacement are alternately performed by the stereo matching circuit (3031) for one frame, wherein the vertical displacement calculation of an image is started while an imaging unit is capturing the image, and wherein, after the process of detecting the vertical displacement is finished, the vertical displacement of the image used in the vertical displacement detection is adjusted, and, using the adjusted image, the process of calculating parallax is performed.

2. The stereo camera device (10) according to claim 1, wherein
the one-dimensional converting unit (305) includes a block line buffer configured to hold block line data for one line extracted while shifting a vertical position of the reference image.

3. The stereo camera device (10) according to claim 1 or 2, wherein

the stereo matching circuit (3031) includes a memory configured to hold a result of the plurality of searched block lines,

a position of the reference image where a degree of coincidence with the standard image is maximum from the memory is set as a matching position, and

a subpixel in a vertical direction is calculated using a matching result of the matching position and matching results of the block lines positioned above and below the matching position.

**Patentansprüche**

1. Stereokameravorrichtung (10), die umfasst:

   eine Stereoanpassungsschaltung (3031), die konfiguriert ist, eine Parallaxe zwischen einem Standardbild und einem Referenzbild zu berechnen, wobei

   die Stereoanpassungsschaltung (3031) eine eindimensionale Umsetzungseinheit (305) enthält, die konfiguriert ist, ein zweidimensionales Bild in Blocklinieneinheiten auszulesen, und

   die Stereoanpassungsschaltung (3031) mehrere der Blocklinien nach dem Referenzbild durchsucht und eine vertikale Verschiebung des Referenzbilds relativ zu dem Standardbild detektiert, **dadurch gekennzeichnet, dass**

   ein Verfahren zum Berechnen einer Parallaxe und ein Verfahren zum Detektieren der vertikalen Verschiebung abwechselnd durch die Stereoanpassungsschaltung (3031) für einen Rahmen ausgeführt werden, wobei die Berechnung der vertikalen Verschiebung eines Bildes gestartet wird, während eine Abbildungseinheit das Bild aufnimmt, und wobei, nachdem das Verfahren zum Detektieren der vertikalen Verschiebung beendet worden ist, die vertikale Verschiebung des Bildes, die in der Detektion der vertikalen Verschiebung verwendet wird, angepasst wird und unter Verwendung des angepassten Bildes das Verfahren zum Berechnen der Parallaxe ausgeführt wird.

2. Stereokameravorrichtung (10) nach Anspruch 1, wobei
   die eindimensionale Umsetzungseinheit (305) einen Blocklinienzwischenspeicher enthält, der konfiguriert ist, Blockliniendaten für eine Linie zu enthalten, die extrahiert wird, während eine vertikale Position des Referenzbildes verschoben wird.

3. Stereokameravorrichtung (10) nach Anspruch 1 oder 2, wobei

   die Stereoanpassungsschaltung (3031) einen Speicher enthält, der konfiguriert ist, ein Ergebnis der mehreren durchsuchten Blocklinien zu enthalten,

   eine Position des Referenzbildes, wo ein Übereinstimmungsgrad mit dem Standardbild maximal ist, von dem Speicher als eine Anpassungsposition eingestellt wird und

   ein Unterpixel in einer vertikalen Richtung unter Verwendung eines Anpassungsergebnisses der Anpassungsposition und von Anpassungsergebnissen der Blocklinien, die über und unter der Anpassungsposition positioniert sind, berechnet wird.

**Revendications**

1. Dispositif de caméra stéréoscopique (10) comprenant :

   un circuit de correspondance stéréoscopique (3031) configuré pour calculer une parallaxe entre une image standard et une image de référence, dans lequel

   le circuit de correspondance stéréoscopique (3031) inclut une unité de conversion unidimensionnelle (305) configurée pour lire une image bidimensionnelle en unités de lignes de blocs, et

   le circuit de correspondance stéréoscopique (3031) recherche une pluralité de lignes de blocs pour l'image de référence, et détecte un déplacement vertical de l'image de référence relativement à l'image standard, **caractérisé en ce que**

   un processus de calcul de parallaxe et un processus de détection du déplacement vertical sont exécutés en alternance par le circuit de correspondance stéréoscopique (3031) pour une trame, dans lequel le calcul de déplacement vertical d'une image est démarré pendant qu'une unité d'imagerie capture l'image, et dans lequel, une fois le processus de détection du déplacement vertical terminé, le déplacement vertical de l'image utilisée dans la détection de déplacement vertical est ajusté, et, en utilisant l'image ajustée, le processus de calcul de parallaxe est exécuté.

2. Dispositif de caméra stéréoscopique (10) selon la revendication 1, dans lequel

l'unité de conversion unidimensionnelle (305) inclut un tampon de lignes de blocs configuré pour détenir des données de lignes de blocs pour une ligne extraite tout en décalant une position verticale de l'image de référence.

3. Dispositif de caméra stéréoscopique (10) selon la revendication 1 ou 2, dans lequel

le circuit de correspondance stéréoscopique (3031) inclut une mémoire configurée pour détenir un résultat de la pluralité de lignes de blocs recherchées,
une position de l'image de référence dans laquelle un degré de coïncidence avec l'image standard est maximum depuis la mémoire est fixée comme position de correspondance, et
un sous-pixel dans une direction verticale est calculé en utilisant un résultat de correspondance de la position de correspondance et en faisant correspondre des résultats des lignes de blocs positionnées au-dessus et en dessous de la position de correspondance.

# FIG. 1

# FIG. 2

# FIG. 3

AFFINE-TRANSFORMED
LEFT IMAGE

AFFINE-TRANSFORMED
RIGHT IMAGE

TWO-DIMENSIONAL BLOCK
MATCHING PROCESS

# FIG. 4

PARALLAX CALCULATION UNIT _303_

VERTICAL DISPLACEMENT DETECTION UNIT _304_   305

ONE-DIMENSIONAL CONVERTING UNIT _305_

24   3050 REFERENCE IMAGE BLOCK MEMORY

24

16   3051 BLOCK LINE BUFFER

REFERENCE IMAGE LINE BUFFER

128

8   SCAN IN HORIZONTAL DIRECTION

3030

STEREO MATCHING CIRCUIT _3031_

3034

128 WORDS

EVALUATION RESULT MEMORY A

3033

DEGREE-OF-COINCIDENCE EVALUATION UNIT (BLOCK MATCHING)

9 WORDS

9 LINES

EVALUATION RESULT MEMORY B

306

SUBPIXEL PROCESSING UNIT

3035

8
8
3032
STANDARD IMAGE BUFFER A

16
16   307
STANDARD IMAGE BUFFER B

# FIG. 5

DEGREE-OF-COINCIDENCE EVALUATION VALUE   4014

4010

4011

4012

4015

4013

X−1   X   X+1   SCAN COORDINATE

4016
SUBPIXEL

MATCHING POSITION
( X COORDINATE OF
  MINIMUM VALUE )

# FIG. 6

Y COORDINATE

DEGREE-OF-COINCIDENCE
EVALUATION VALUE

SUBPIXEL 4026

MATCHING POSITION
$\left(\begin{array}{c} \text{Y COORDINATE OF} \\ \text{MINIMUM VALUE} \end{array}\right)$

4025    4020

4024

4021

4022

4023

Y+1

Y

Y−1

# FIG. 7

```
              ( START )
                  |
                  v
```

STORE ONE REFERENCE IMAGE FROM AFFINE-TRANSFORMED
LEFT IMAGE IN REFERENCE IMAGE BLOCK MEMORY
AND STORE ONE STANDARD IMAGE FROM AFFINE-TRANSFORMED
RIGHT IMAGE IN STANDARD IMAGE BUFFER B    ⌐S100

REFERENCE POINTER Yp OF REFERENCE
IMAGE BLOCK MEMORY = 0    ⌐S110

INPUT DATA OF 16 PIXELS VERTICALLY AND 24 PIXELS
HORIZONTALLY FROM POSITION OF REFERENCE
POINTER Yp TO BLOCK LINE BUFFER    ⌐S120

BLOCK MATCHING PROCESS FOR ONE LINE    S130

$Yp = Yp + 1$    S140

No ← IS ALL OF REFERENCE IMAGE BLOCK MEMORY REFERRED TO?    S150

Yes

EXTRACT Y COORDINATE OF MINIMUM VALUE AND ITS EVALUATION
VALUE FROM RESULT OF EVALUATION RESULT MEMORY B    S160

CALCULATE SUBPIXEL    S170

No ← ARE THREE OF REFERENCE IMAGES A, B, AND C FINISHED?    S180

Yes

CALCULATE VERTICAL DISPLACEMENT AMOUNT FROM Y COORDINATES
OF MATCHING POSITIONS OF REFERENCE IMAGES A, B, AND C    S190

SET VERTICAL DISPLACEMENT AMOUNT IN VERTICAL DISPLACEMENT
ADJUSTMENT REGISTER OF AFFINE TRANSFORMATION UNIT    S200

```
              ( END )
```

# FIG. 8

APPROXIMATE
STRAIGHT LINE
500

MATCHING POSITION OF
REFERENCE IMAGE B
502

MATCHING POSITION OF
REFERENCE IMAGE A
501

MATCHING POSITION OF
REFERENCE IMAGE C
503

504
ROTATION ANGLE θ

505 HORIZONTAL LINE

X COORDINATE

506
LEFT IMAGE VERTICAL OFFSET
ShiftY

+Y

−Y

0

# FIG. 9

IMAGE CAPTURING (IMAGING UNIT)

PARALLAX CALCULATION UNIT

PARALLAX CALCULATION

VERTICAL DISPLACEMENT DETECTION

VERTICAL DISPLACEMENT DETECTION

VERTICAL DISPLACEMENT DETECTION

POWER CONSUMPTION

AMOUNT OF CHANGE IN POWER CONSUMPTION IS SMALL IN PARALLAX CALCULATION AND VERTICAL DISPLACEMENT DETECTION PROCESS

TIME

# FIG. 10

IMAGE CAPTURING (IMAGING UNIT)

PARALLAX CALCULATION UNIT

VERTICAL DISPLACEMENT DETECTION

PARALLAX CALCULATION

VERTICAL DISPLACEMENT DETECTION

VERTICAL DISPLACEMENT DETECTION

**EP 3 640 585 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003256875 A
- EP 1085463 A2
- US 2014009577 A1